# EUROPÄISCHE PATENTSCHRIFT

(11) **EP 1 265 823 B1**
(45) Veröffentlichungstag und Bekanntmachung des Hinweises auf die Patenterteilung: **25.08.2004**
(21) Anmeldenummer: 01911751.4
(22) Anmeldetag: 08.03.2001
(51) Int. Cl.: C04B 18/02, C04B 40/00, B01F 15/02, B28C 7/02

(54) **VERFAHREN UND VORRICHTUNG ZUM GRANULIEREN VON SCHLÄMMEN UND GEGEBENENFALLS STAUBFÖRMIGEM MATERIAL**
METHOD AND DEVICE FOR GRANULATING SLURRY AND OPTIONAL POWDERED MATERIAL
PROCEDE ET DISPOSITIF POUR LA GRANULATION DE BOUES ET DE L'EVENTUELLE MATIERE PULVERULENTE

(30) Priorität: 20.03.2000 DE 10013664
(43) Veröffentlichungstag der Anmeldung: 18.12.2002
(73) Patentinhaber: Voest-Alpine Industrieanlagenbau GmbH & Co., 4020 Linz (AT); Zettl Ingenieur- und Vertriebsgesellschaft mbH & Co. KG, 81247 München (DE)
(72) Erfinder: AICHINGER, Christoph, A-4112 Rottenegg (AT); AIGNER, Alfred, A-4391 Waldhausen (AT); SCHREY, Günter, A-4040 Linz (AT); ZETTL, Stefan, 81247 München (US)
(74) Vertreter: VA TECH Patente GmbH & Co
(86) Internationale Anmeldenummer: PCT/EP2001/002598
(87) Internationale Veröffentlichungsnummer: WO 2001/070645

(56) Entgegenhaltungen:
- EP-A- 0 031 894
- EP-A- 0 805 786
- DD-A- 253 420
- DE-C- 373 181
- US-A- 4 490 178
- US-A- 4 915 741
- PATENT ABSTRACTS OF JAPAN vol. 005, no. 128 (C-067), 18. August 1981 (1981-08-18) -& JP 56 062534 A (ITO YASURO), 28. Mai 1981 (1981-05-28)
- DATABASE WPI Section PQ, Week 197945 Derwent Publications Ltd., London, GB; Class P64, AN 1979-K5423B XP002170447 & SU 647 117 A (KUIB ORGENERGOSTROI), 17. Februar 1979 (1979-02-17)

## Beschreibung

Die Erfindung betrifft ein Verfahren zum Granulieren von schlamm- und gegebenenfalls staubförmigem Material, wobei das zu granulierende Material mit hydratisierbaren bzw. hydraulisch abbindbaren Feststoffen und Wasser vermischt wird, welche Feststoffe mit Wasser exotherm reagieren und in dem Mischgut als Bindemittel wirken, wobei die Feststoffe ganz oder teilweise hydratisieren bzw. abbinden gelassen werden und wobei das Mischgut, welches die ganz oder teilweise hydratisierten bzw. abgebundenen Feststoffe enthält, zu Granulaten geformt wird. Ein weiterer Gegenstand der Erfindung betrifft eine Vorrichtung zur Durchführung des Verfahrens.

Das Granulieren von Schlämmen mit hydraulisch abbindenden Feststoffen ist vielfach aus dem Stand der Technik bekannt.

So ist es beispielsweise aus der EP 0 031 894 A2 bekannt, wasserhältigen Schlamm mit einem hydratisierbaren bzw. hydraulisch abbindbaren Feststoff zu vermischen und die Mischung zu granulieren. Dabei werden Branntkalk und Schlamm mittels zweier Förderschnecken, welche zunächst Branntkalk und Schlamm jeweils separat fördern, einer Misch- und Granuliereinrichtung zugefördert, wobei die Misch- und Granuliereinrichtung von den beiden Förderschnecken, welche nun ineinander arbeiten, gebildet wird.

Auf diese Weise wird ein Übergabestelle von Branntkalk und Schlamm geschaffen, welche vom Ort der Zudosierung des Branntkalks ausreichend weit entfernt ist und daher Probleme vermeidet, die aus der exothermen Reaktion von Branntkalk mit dem Schlammwasser resultieren.

In der EP 0 805 786 B1 werden Schlämme, die bei der Reduktion von Eisenerz mit einem Reduktionsgas zunächst als Stäube anfallen und in einem Wäscher in Form von Schlämmen abgeschieden werden, mit Branntkalk und gegebenenfalls Kohlenstaub vermischt und anschließend granuliert.

Beiden genannten Verfahren ist es gemeinsam, dass beim Vermischen der feuchten Schlämme mit den hydratisierbaren beziehungsweise hydraulisch abbindenden Feststoffen die sich einstellenden Bindemitteleigenschaften der Feststoffe vom Feuchtegehalt der Schlämme abhängig sind. Da aber der Feuchtegehalt von Schlämmen in der Regel nicht konstant ist, führt dies beim Zumischen der Feststoffe zu schwankenden Prozessbedingungen und in der Folge zu einer nicht konstanten Qualität der Granulate. Eine gleichzeitige Granulation von Stäuben ist - ohne zusätzliche Wasserzugabe - nur in dem Ausmaß möglich, in dem die Schlämme einen Wasserüberschuß enthalten.

Es ist die Aufgabe der gegenständlichen Erfindung, ein Verfahren zu schaffen, bei welchem die Probleme beim Vermischen von Feststoffen und zu granulierendem Material verringert sind und weiches es auch gestattet, schlammförmiges und staubförmiges Material in beliebigen Mengenverhältnissen zu Granulaten von jeweils gleichbleibend hoher Qualität zu verarbeiten.

Diese Aufgabe wird nun erfindungsgemäß dadurch gelöst, dass die Feststoffe und gegebenenfalls zu granulierendes staubförmiges Material mit Wasser benetzt bzw. befeuchtet werden und die Feststoffe anschließend und/oder im wesentlichen zeitgleich dazu mit dem zu granulierenden Material vermischt werden, wobei den Feststoffen soviel Wasser zugesetzt wird, dass sich beim nachfolgenden Misch- und/oder Granulationsvorgang eine - die weitere Abtrocknung von nicht umgesetztem Wasser unterstützende bzw. bewirkende - Temperatur einstellt.

Die Maßnahme, die Feststoffe mit Wasser zu befeuchten, und zwar bevor sie mit dem zu granulierenden Material vermischt werden, bzw. im wesentlichen zeitgleich dazu, bewirkt zweierlei: Ein Teil des Wassers reagiert mit den Feststoffen, noch bevor diese mit dem Material vermengt werden. Dies hat zur Folge, dass das zu granulierende Material bereits zum Teil mit Bindemittel vermischt wird und nicht etwa mit einer Substanz, aus der sich das gesamte Bindemittel erst bilden müsste.

Zweitens bleibt ein Teil des Wassers noch erhalten, wodurch es möglich wird feuchte Schlämme bzw. befeuchtete Stäube mit feuchtem Feststoff zu vermischen. Die bekannten Schwierigkeiten, die beim Vermischen von feuchten mit trockenen Substanzen auftreten, wie etwa Klumpenbildung, verringern sich stark bzw. entfallen ganz.

Unter staubförmigem Material werden dabei Stäube, beispielsweise Kohlenstoffstäube oder oxidische Stäube, wie Erzstäube, Filterstäube, etc., die nicht als Bindemittel wirken können, verstanden. Vom erfindungsgemäßen Verfahren werden also sowohl Anwendungsfälle erfasst, bei denen ausschließlich Schlämme, als auch hauptsächlich bzw. ausschließlich Stäube, gegebenenfalls unter Beimischung von Anteilen an Schlämmen granuliert werden sollen.

Da Wasser mit den Feststoffen exotherm reagiert, kann durch Regulierung der Wasserzugabe die sich einstellende Misch- und Granulationstemperatur gesteuert werden.

Die Wasserzugabe wird dabei vorteilhafterweise so geregelt, dass den Feststoffen soviel Wasser zugesetzt wird, dass sich danach eine Mischtemperatur von 80 bis 97 °C, vorzugsweise von 88 bis 95 °C einstellt.

Mit dem erfindungsgemäßen Verfahren kann ein hohes Temperaturniveau gezielt eingestellt und konstant gehalten werden. Ein konstant hohes Temperaturniveau gestattet zum einen eine gleichmäßig hohe chemische Umsetzungsgeschwindigkeit und auch eine hohe Verdampfungsleistung. In Summe ermöglicht das erfindungsgemäße Verfahren daher eine beschleunigte Herstellung von Granulaten konstant hoher Qualität.

Die Mischtemperatur kann aber natürlich nicht nur durch eine Variation der Wasserzugabe gesteuert werden, sondern zusätzlich auch noch durch eine Mengenregelung der hydratisierbaren bzw. hydraulisch abbindbaren Feststoffe.

Gemäß einer vorteilhaften Ausführungsform des erfindungsgemäßen Verfahrens wird den Feststoffen eine Wassermenge zugesetzt, weiche zumindest gleich groß wie die für das vollständige Hydratisieren bzw. Abbinden der Feststoffe erforderliche Wassermenge ist.

Es hat sich gezeigt, dass das erfindungsgemäße Verfahren die besten Resultate hinsichtlich der Qualität der Granulate, insbesondere der Mischungshomogenität und der mechanischen Stabilität erzielt, wenn eine Wassermenge zugesetzt wird, die zumindest gleich groß ist, bevorzugterweise aber über jener Menge liegt, welche aufgrund der Stöchiometrie für einen vollständigen Umsatz der Feststoffe theoretischerweise benötigt wird.

Da der Umsatz der Feststoffe mit Wasser bis zum Zeitpunkt des Inkontaktbringens mit dem zu granulierenden Material noch nicht vollständig ist, ist dann die Konsistenz des Feststoff-Wasser-Gemisches für gute Durchmischbarkeit mit dem zu granulierenden Material optimal.

Als besonders vorteilhaft für das erfindungsgemäße Verfahren hat sich die Verwendung von Branntkalk, insbesondere von Hartbranntkalk als hydratisierbarem bzw. hydraulisch abbindbarem Feststoff erwiesen.

Aber auch ähnliche Substanzen, beispielsweise etwa gebrannter Dolomit, sind für das erfindungsgemäße Verfahren einsetzbar.

Einer Ausführungsform des erfindungsgemäßen Verfahrens zufolge wird staubförmiges Material im wesentlichen zeitgleich und gemeinsam mit den Feststoffen mit Wasser befeuchtet.

Insbesondere beim Granulieren von Stäuben bietet es sich an, die Feststoffe und staubförmiges Material gleichzeitig mit demselben Wasserstrom zu befeuchten.

Einer weiteren Ausführungsform zufolge wird schlammförmiges Material mit den Feststoffen vermischt, nachdem die Feststoffe mit Wasser benetzt wurden.

Gemäß einem weiteren vorteilhaften Merkmal werden Schlämme mit einem Feuchtegehalt von 20 bis 50 %, vorzugsweise von 30 bis 40 % mit den Feststoffen vermischt.

Schlämme mit diesem Feuchtegehalt sind hinsichtlich ihrer Konsistenz und ihrer Handhabbarkeit hervorragend für das erfindungsgemäße Verfahren geeignet. Die Feuchte ist auch ausreichend klein, so dass gegenüber dem Stand der Technik auch kein erhöhter Bedarf an hydratisierbaren bzw. hydraulisch abbindbaren Feststoffen besteht.

Eine weitere Ausführungsform, welche wiederum bei der Verarbeitung von Stäuben zum Tragen kommt, besteht darin, staubförmiges Material getrennt von den Feststoffen mit Wasser zu benetzen und erst danach mit den benetzten Feststoffen zu vermischen.

Beim direkten Einmischen trockener Stäube in feuchte Schlämme ergaben sich jedoch bisher aufgrund des vorgegebenen Feuchtegehaltes der Schlämme enge Grenzen bezüglich der zumischbaren Staubmengen. Zusätzlich tritt auch hier das Problem des Mischens trockener mit feuchten Substanzen auf.

Erfindungsgemäß ist es mit jeder der Ausführungsformen, bei denen Stäube verarbeitet werden, möglich, wesentlich höhere Staubraten zu verarbeiten, als dies bisher bei einer vorgegebenen Schlammwassermenge der Fall ist. Es kommt weiters wiederum der Vorteil zum Tragen, dass ein bereits feuchtes Gut in den Schlamm bzw. die befeuchteten Feststoffe eingemischt werden kann, womit - ebenso wie bei der Verfahrensführung ohne Stäube - eine gegenüber dem Stand der Technik verkürzte Verweilzeit und damit eine optimierte Nutzung des Reaktorvolumens, sowie eine deutliche Verbesserung der Granulatqualität gegeben ist.

Durch Einbringen von Wasser zum Staub wird dieser zunächst befeuchtet und freie Oberflächen der Staubpartikel, zum Teil auch innerhalb von Kapillaren, benetzt. Durch die Benetzung wird vermieden, dass nach der Zugabe der Feststoffe an manchen Stellen das wichtige Verhältnis Feststoffe/Wasser, sowie auch zu den Stäuben, außerhalb des geeigneten Bereichs liegt.

Ein weiterer Vorteil, welcher bei der Verarbeitung aller Stäube, insbesondere aber bei schwer benetzbaren Stäuben, und bei der Verwendung von Branntkalk zum Tragen kommt, liegt darin, dass durch die Bildung von Calciumhydroxid bei der Reaktion von Calciumoxid mit Wasser sich ein hoher pH-Wert einstellt, welcher wiederum die Benetzbarkeit von staubförmigen Stoffen begünstigt.

Zweckmäßigerweise werden zur optimalen Verfahrensführung und -beeinflussung die Misch- und Granulationstemperatur kontinuierlich und/oder diskontinuierlich gemessen und in Abhängigkeit von der gemessenen Temperatur die Wasserzugabe und/oder die Feststoffzugabe und/oder die Misch- und Granulationsgeschwindigkeit gesteuert.

Wasser- und Feststoffzugabe beeinflussen die sich einstellende Misch- und Granulationstemperatur und damit auch die Reaktionsgeschwindigkeit, während eine Regelung der Misch- und Granulationsgeschwindigkeit (durch eine Regelung der Drehzahlen von Mischreaktor/Granulator) eine Anpassung der Verweilzeit im Mischreaktor ermöglicht.

Gegenstand der Erfindung ist auch eine Vorrichtung zur Durchführung des erfindungsgemäßen Verfahrens, mit einem Mischreaktor enthaltend ein Mischgefäß und eine antreibbare Mischvorrichtung, eine Zuführeinrichtung für hydratisierbare bzw. hydraulisch abbindbare Feststoffe, zumindest eine Zuführeinrichtung für zu granulierendes Material, eine Zuführeinrichtung für Wasser und mit einer Granuliereinrichtung.

Mittels der erfindungsgemäßen Vorrichtung sollen Probleme beim Vermischen von Feststoffen und zu granulierendem Material verringert werden und es soll möglich werden, schlammförmiges und staubförmiges Material in beliebigen Mengenverhältnissen zu Granulaten von jeweils gleichbleibend hoher Qualität zu verarbeiten.

Diese Aufgabe wird dadurch gelöst, dass in die Zuführeinrichtung für die Feststoffe die Wasser-Zuführeinrichtung derart mündet, dass zugeführte Feststoffe durch zugeführtes Wasser benetzbar sind, wobei in dem Mischgefäß einer oder mehrere Temperatursensoren angeordnet sind, welche Temperatursensoren mit einer Mess- und Regeleinrichtung verbunden sind, wobei die Meß- und Regeleinrichtung mit der Wasserzuführung und/oder der Feststoff-Zuführung und/oder dem Antrieb der Mischvorrichtung verbunden ist. Die Wasser-Zuführeinrichtung ist dabei so ausgeführt, dass die Feststoffe benetzt sind, noch bevor sie mit anderem Material, das sich bereits im Mischgefäß befindet, in Kontakt gelangen.

Das Mischgefäß ist dabei zweckmäßigerweise als Mischtrommel ausgebildet und die Mischvorrichtung als Mischerwelle mit darauf befestigten Mischwerkzeugen.

Bevorzugterweise ist die dem Mischgefäß nachgeordnete Granuliereinrichtung von dem Mischgefäß räumlich getrennt, etwa in der Art der EP 0 805 786 B1. Die Erfindung umfasst aber auch einen einstufigen Mischer/Granulator, bei dem das Mischgefäß, bzw. die Mischvorrichtung mit darauf befestigten Misch- und Granulierwerkzeugen die Herstellung der Granulate bewirkt.

Zweckmäßigerweise ist an dem Mischgefäß ein Dampfbrüdenabzug angeordnet, durch welchen die im Zuge des Mischens und Granulierens abtrocknende Feuchtigkeit aus dem Mischgefäß abgezogen wird.

In dem Mischgefäß sind einer oder mehrere Temperatursensoren angeordnet, welche Temperatursensoren mit einer Mess- und Regeleinrichtung verbunden sind, wobei die Meß- und Regeleinrichtung mit der Wasserzuführung und/oder der Feststoff-Zuführung und/oder dem Antrieb der Mischvorrichtung verbunden ist.

Damit kann auf die Verfahrensführung, insbesondere auf die sich einstellende Temperatur, die Verweilzeit im Reaktor, die Restfeuchte des Granulates und damit auf die Qualität der Granulate optimal Einfluß genommen werden.

Der Meß- und Regeleinrichtung ist dabei in bekannter Weise ein Sollwert für die Mischund Granulationstemperatur von außen zuführbar.

In bevorzugter Weise ist dabei staubförmiges Material dem Mischgefäß über die Feststoff-Zuführeinrichtung zuführbar, wobei Feststoffe und Stäube gemeinsam durch Wasser, welches mittels der Wasser-Zuführeinrichtung zuführbar ist, benetzbar sind. Staubförmiges Material wird wiederum benetzt, bevor es mit Material, welches sich bereits im Mischgefäß befindet, in Kontakt tritt und damit vermischt wird.

Gemäß einem weiteren Merkmal ist an dem Mischgefäß eine separate Zuführeinrichtung vorgesehen, mittels welcher staubförmiges Material dem Mischgefäß zuführbar ist, in welche Staub-Zuführeinrichtung eine weitere Wasser-Zuführeinrichtung derart mündet, dass über die separate Staub-Zuführeinrichtung zugeführte Stäube durch mittels der weiteren Wasser-Zuführeinrichtung zugeführtes Wasser benetzbar sind.

Auch die weitere Wasser-Zuführeinrichtung ist derart angeordnet, dass staubförmiges Material benetzt ist, noch bevor es mit anderem Material, das sich bereits im Mischgefäß befindet, in Kontakt gelangt und damit vermischt wird.

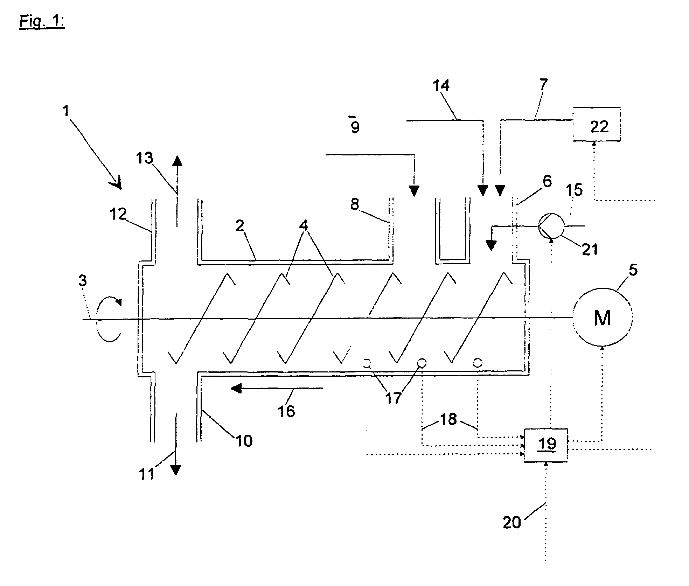

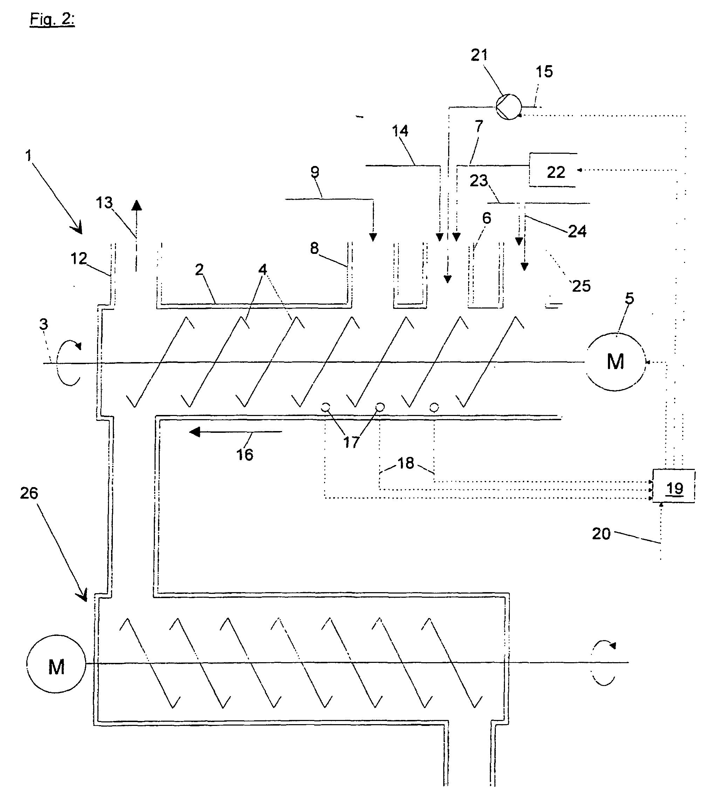

Nachfolgend werden das erfindungsgemäße Verfahren und die erfindungsgemäße Vorrichtung anhand der in den Zeichnungen Fig. 1 und 2 schematisch dargestellten Ausführungsformen erläutert.

Der in der Zeichnung Fig. 1 dargestellte Mischreaktor 1 besteht aus einem Mischgefäß 2, welches hier als Mischtrommel ausgebildet ist und einer Mischerwelle 3, auf welcher Misch- und Granulierwerkzeuge 4 befestigt sind. Die Mischerwelle 3 ist von außerhalb des Mischgefäßes 2 antreibbar, etwa mittels eines Elektromotors 5.

Das Mischgefäß 2 ist mit einer Zuführeinrichtung 6 für Feststoffe 7, etwa Branntkalk, und mit einer Zuführeinrichtung 8 für Schlamm 9 versehen. Das Mischgefäß 2 ist weiters mit einer Abzugseinrichtung 10 für Granulate 11 und mit einer Abzugseinrichtung 12 für Dampfbrüden 13 versehen. In die Zuführeinrichtung 6 für Feststoffe 7 sind zusätzlich Stäube 14 einbringbar und eine Wasserzuführung 15 mündet in die Feststoff-Zuführeinrichtung 6.

Die Zuführeinrichtungen 6, 8 für Feststoffe 7 und Schlämme 9 sind bevorzugterweise als Einfüllstutzen ausgeführt. Feststoffe 7 und Schlämme 9 werden mittels eigener Chargiervorrichtungen (zeichnerisch nicht dargestellt) zunächst den Zuführeinrichtungen aufgegeben. Die Wasser-Zuführungseinrichtung 15 ist dabei vorzugsweise als eine oder mehrere Düsen ausgestaltet, von welchen Düsen ein "Wasserkegel" ausgeht. Die Chargiervorrichtungen für Feststoffe und Stäube fördern direkt auf diesen Wasserkegel. Eine sofortige und unmittelbare Benetzung von Feststoffen und Stäuben ist die Folge.

Bei Betrieb des Mischreaktors 1 werden über die Zuführeinrichtung 6 Branntkalk und oxidische Stäube in das Mischgefäß 2 chargiert und gleichzeitig über die Wasserzuführung 15 Wasser in das Mischgefäß 2 eingesprüht und dadurch die Stäube und der Branntkalk befeuchtet. Die angetriebene Mischerwelle 3 erzeugt mit den Mischund Granulierwerkzeugen 4 einen Materialfuß 16 in Richtung der Granulat-Abzugseinrichtung 10. Wasser, Branntkalk und Stäube werden miteinander vermischt und Wasser und Branntkalk beginnen miteinander zu Ca(OH)₂, dem eigentlichen Bindemittel, zu reagieren. Über die Zuführeinrichtung 8 werden feuchte Schlämme in das Mischgefäß 2 chargiert und mit dem Gemisch aus befeuchteten Stäuben und befeuchtetem und teilweise umgesetztem Branntkalk vermischt. Im Zuge des weiteren Mischens und Granulierens wird der restliche Branntkalk umgesetzt und das Gemisch auf dem zweiten Teil der Mischstrecke zu Granulaten 11 geformt, die über die Granulat-Abzugseinrichtung 10 aus dem Mischgefäß 2 abgezogen werden. Aufgrund der bei der Umsetzung von Branntkalk mit Wasser freigesetzten Wärme verdampft ein Teil des restlichen Wassers, welches als Dampf 13 über die Dampf-Abzugseinrichtung 12 abgezogen wird.

Zum Messen der Misch- und Granulationstemperatur sind in dem Mischgefäß 2 an geeigneten Stellen Temperatursensoren 17 angeordnet, welche über Signalleitungen 18 mit einer Meß- und Regeleinrichtung 19 verbunden sind. Der Meß- und Regeleinrichtung 19 ist von außen ein Temperatur-Sollwert 20 zuführbar, sowie gegebenenfalls Soll- und Istwerte weiterer Verfahrens- und Granulateparameter (in der Zeichnung nicht dargestellt), wie etwa Granulat-Restfeuchte, Verweilzeit, Wasser- und Branntkalkzuführungsgeschwindigkeit, etc.. Nach von der Meß- und Regeleinrichtung 19 vorgenommenen Soll-Ist-Vergleichen, gegebenenfalls unter Berücksichtigung von vorgegebenen Toleranzschwellen, kann von der Meß- und Regeleinrichtung 19 auf das jeweilige Anlagenteil regelnd eingewirkt werden, etwa auf den die Mischerwelle 3 antreibenden Motor 5, eine in der Wasserzuführung 15 angeordnete Pumpe 21 oder eine die Branntkalkzugabe steuernde Dosiervorrichtung 22.

Die in Fig. 2 dargestellte Ausführungsform unterscheidet sich dadurch von der in Fig. 1 gezeigten Ausführungsform, dass zusätzlich eine separate Zuführungseinrichtung 25 für Stäube 23 vorgesehen ist. Eine weitere Wasser-Zuführungseinrichtung 24, welche bevorzugterweise zu der Wasser-Zuführungseinrichtung 15 bau- und funktionsgleich ist, mündet in die separate Staub-Zuführungseinrichtung 25.

Dem Mischreaktor 1 ist außerdem ein baulich davon getrennter Granulator 26 nachgeordnet, in dem die Herstellung der Granulate durchgeführt wird.

### Ausführungsbeispiel

1800 kg/h oxidische Stäube und 2200 kg/h Branntkalk werden gemeinsam über eine Schurre einem Mischreaktor aufgegeben. Während der Aufgabe werden Stäube und Branntkalk mit 1400 l/h Wasser benetzt. Das mit Wasser benetzte Gemenge aus oxidischen Stäuben und Branntkalk wird unmittelbar darauf mit 8600 kg/h teilentwässertem Schlamm vermischt. Der Schlamm weist eine Restfeuchte von ca. 31% auf und stammt aus Nasswäschereinrichtungen einer Erzreduktionsanlage.

Durch die exotherme Reaktion des Wassers mit dem Branntkalk stellt sich im Mischreaktor eine konstante Temperatur von ca. 91 - 92 °C ein. Nach Abzug von Dampfbrüden wird granuliertes Material mit einer Restfeuchte von ca. 18% ausgetragen.

## Patentansprüche

1. Verfahren zum Granulieren von schlamm- und gegebenenfalls staubförmigem Material, wobei das zu granulierende Material mit hydratisierbaren bzw. hydraulisch abbindbaren Feststoffen und Wasser vermischt wird, welche Feststoffe mit Wasser exotherm reagieren und in dem Mischgut als Bindemittel wirken, wobei die Feststoffe ganz oder teilweise hydratisieren bzw. abbinden gelassen werden und wobei das Mischgut, welches die ganz oder teilweise hydratisierten bzw. abgebundenen Feststoffe enthält, zu Granulaten geformt wird, **dadurch gekennzeichnet, dass** die Feststoffe und gegebenenfalls zu granulierendes staubförmiges Material mit Wasser benetzt bzw. befeuchtet werden und die Feststoffe anschließend und gegebenenfalls im wesentlichen zeitgleich dazu mit dem zu granulierenden Material vermischt werden, wobei den Feststoffen soviel Wasser zugesetzt wird, dass sich beim nachfolgenden Misch- und/oder Granulationsvorgang eine - die weitere Abtrocknung von nicht umgesetztem Wasser unterstützende bzw. bewirkende - Temperatur einstellt.

2. Verfahren nach Anspruch 1, **dadurch gekennzeichnet, dass** den Feststoffen soviel Wasser zugesetzt wird, dass sich danach eine Mischtemperatur von 80 bis 97 °C, vorzugsweise von 88 bis 95 °C einstellt.

3. Verfahren nach einem der Ansprüche 1 oder 2, **dadurch gekennzeichnet, dass** den Feststoffen eine Wassermenge zugesetzt wird, welche zumindest gleich groß wie die für das vollständige Hydratisieren bzw. Abbinden der Feststoffe erforderliche Wassermenge ist.

4. Verfahren nach einem der Ansprüche 1 bis 3, **dadurch gekennzeichnet, dass** als hydratiserbarer bzw. hydraulisch abbindbarer Feststoff Branntkalk, vorzugsweise Hartbranntkalk verwendet wird.

5. Verfahren nach einem der Ansprüche 1 bis 4, **dadurch gekennzeichnet, dass** staubförmiges Material im wesentlichen zeitgleich und gemeinsam mit den Feststoffen mit Wasser befeuchtet wird.

6. Verfahren nach einem der Ansprüche 1 bis 5, **dadurch gekennzeichnet, dass** schlammförmiges Material mit den Feststoffen vermischt wird, nachdem die Feststoffe mit Wasser benetzt wurden.

7. Verfahren nach einem der Ansprüche 1 bis 6, **dadurch gekennzeichnet, dass** schlammförmiges Material mit einem Feuchtegehalt von 20 bis 50 %, vorzugsweise von 30 bis 40 % eingesetzt wird.

8. Verfahren nach einem der Ansprüche 1 bis 7, **dadurch gekennzeichnet, dass** staubförmiges Material getrennt von den Feststoffen mit Wasser benetzt wird und danach mit den benetzten Feststoffen vermischt wird.

9. Verfahren nach einem der Ansprüche 1 bis 8, **dadurch gekennzeichnet, dass** die Misch- und Granulationstemperatur kontinuierlich und/oder diskontinuierlich gemessen wird und in Abhängigkeit von der gemessenen Temperatur die Wasserzugabe und/oder die Feststoffzugabe und/oder die Misch- und Granulationsgeschwindigkeit gesteuert wird.

10. Vorrichtung zur Durchführung des Verfahrens nach einem der Ansprüche 1 bis 9, mit einem Mischreaktor (1) enthaltend ein Mischgefäß (2) und eine antreibbare Mischvorrichtung (3), eine Zuführeinrichtung (6) für hydratisierbare bzw. hydraulisch abbindbare Feststoffe (7), zumindest eine Zuführeinrichtung (6,8,25) für zu granulierendes Material (9,14,23), eine Zuführeinrichtung (15) für Wasser und mit einer Granuliereinrichtung, **dadurch gekennzeichnet, dass** in die Zuführeinrichtung (6) für die Feststoffe (7) die Wasser-Zuführeinrichtung (15) derart mündet dass zugeführte Feststoffe durch zugeführtes Wasser benetzbar sind, wobei in dem Mischgefäß (2) einer oder mehrere Temperatursensoren (17) angeordnet sind, welche Temperatursensoren (17) mit einer Mess- und Regeleinrichtung (19) verbunden sind, wobei die Meß- und Regeleinrichtung (19) mit der Wasserzuführung (15) und/oder einer Dosieresinrichtung (22) für die Feststoffe (7) und/oder dem Antrieb (5) der Mischvorrichtung (3) verbunden ist.

11. Vorrichtung nach Anspruch 10, **dadurch gekennzeichnet, dass** an dem Mischgefäß (2) ein Dampfbrüdenabzug (12) angeordnet ist.

12. Vorrichtung nach einem der Ansprüche 10 oder 11, **dadurch gekennzeichnet, dass** staubförmiges Material (14) dem Mischgefäß (2) über die Feststoff-Zuführeinrichtung (6) zuführbar ist und dass Feststoffe (7) und Stäube (14) gemeinsam durch Wasser, welches mittels der Wasser-Zuführeinrichtung (15) zuführbar ist, benetzbar sind.

13. Vorrichtung nach einem der Ansprüche 10 bis 12, **dadurch gekennzeichnet, dass** an dem Mischgefäß (2) eine separate Zuführeinrichtung (25) vorgesehen ist, mittels welcher staubförmiges Material (23) dem Mischgefäß (2) zuführbar ist, in welche Staub-Zuführeinrichtung (25) eine weitere Wasser-Zuführeinrichtung (24) derart mündet, dass über die separate Staub-Zuführeinrichtung (25) zugeführte Stäube (23) durch Mittels der weiteren Wasser-Zuführeinrichtung (24) zugeführtes Wasser benetzbar sind.

## Claims

1. Process for the granulation of sludge- and optionally dust-form material, in which the material to be granulated is mixed with hydratable or hydraulically settable solids and water, which solids react exothermically with water and act as binder in the mixture, where the solids are allowed to hydrate or set fully or partly, and where the mixture containing the fully or partly hydrated or set solids is shaped into granules, **characterized in that** the solids and optionally dust-form materials to be granulated are wetted or moistened with water, and subsequently and optionally at essentially the same time the solids are mixed with the material to be granulated, sufficient water being added to the solids so that a temperature which supports or effects further drying off of unreacted water arises during the subsequent mixing and/or granulation operation.

2. Process according to Claim 1, **characterized in that** sufficient water is added to the solids so that a mixing temperature of from 80 to 97°C, preferably from 88 to 95°C, then results.

3. Process according to either of Claims 1 and 2, **characterized in that** an amount of water which is at least equally as large as the amount of water necessary for complete hydration or setting of the solids is added to the solids.

4. Process according to one of Claims 1 to 3,
**characterized in that** the hydratable or hydraulically settable solid used is burnt lime, preferably hard burnt lime.

5. Process according to one of Claims 1 to 4,
**characterized in that** dust-form material is moistened with water at essentially the same time as and together with the solids.

6. Process according to one of Claims 1 to 5,
**characterized in that** sludge-form material is mixed with the solids after the solids have been wetted with water.

7. Process according to one of Claims 1 to 6,
**characterized in that** sludge-form material having a moisture content of from 20 to 50%, preferably from 30 to 40%, is employed.

8. Process according to one of Claims 1 to 7,
**characterized in that** dust-form material is wetted with water separately from the solids and then mixed with the wetted solids.

9. Process according to one of Claims 1 to 8,
**characterized in that** the mixing and granulation temperature is measured continuously and/or discontinuously, and the addition of water and/or the addition of solids and/or the mixing and granulation speed is controlled as a function of the measured temperature.

10. Apparatus for carrying out the process according to one of Claims 1 to 9, having a mixing reactor (1) comprising a mixing vessel (2) and a drivable mixing device (3), a feed device (6) for hydratable or hydraulically settable solids (7), at least one feed device (6, 8, 25) for material to be granulated (9, 14, 23), a feed device (15) for water, and a granulation device, **characterized in that** the water feed device (15) merges into the feed device (6) for the solids (7) in such a way that fed solids are wettable by fed water **characterized in that** one or more temperature sensors (17) being arranged in the mixing vessel (2), which temperature sensors (17) are connected to a measurement and control device (19), where the measurement and control device (19) is connected to the water feed (15) and/or a metering device (22) for the solids (7) and/or the drive (5) of the mixing device (3).

11. Apparatus according to Claim 10, **characterized in that** a steam vapour extractor (12) is arranged on the mixing vessel (2).

12. Apparatus according to either of Claims 10 and 11, **characterized in that** dust-form material (14) can be fed to the mixing vessel (2) via the solids feed device (6), and **in that** solids (7) and dusts (14) can be wetted jointly by water which can be fed in by means of the water feed device (15).

13. Apparatus according to one of Claims 10 to 12, **characterized in that** a separate feed device (25) by means of which dust-form material (23) can be fed to the mixing vessel (2) is provided on the mixing vessel (2), into which dust feed device (25) a further water feed device (24) merges in such a way that dusts (23) fed in via the separate dust feed device (25) can be wetted by water fed in by means of the further water feed device (24).

## Revendications

1. Procédé en vue de la granulation de matériau sous forme de boues, et, le cas échéant, sous forme de poussières, le matériau à granuler étant mélangé avec des substances solides, capables d'hydratation ou pouvant être fixées par voie hydraulique, et avec de l'eau, lesquelles substances réagissent par voie exothermique avec l'eau et agissent dans le produit de mélange en tant que liant, les substances solides subissant une hydratation complète ou partielle ou se laissant fixer complètement ou partiellement et le produit de mélange, qui contient les substances solides complètement ou partiellement hydratées ou fixées, étant mis sous la forme de granulats, **caractérisé en ce que** les substances solides et, le cas échéant, le matériau sous forme de poussières à granuler sont mouillés ou humidifiés à l'aide d'eau et que les substances solides sont ensuite, à cet effet, et, le cas échéant, pour l'essentiel simultanément, mélangées au matériau à granuler, étant donné que l'on ajoute aux substances solides suffisamment d'eau pour que, lors de la procédure de mélange et/ou de granulation subséquente, s'établisse une température qui facilite ou qui effectue le séchage supplémentaire de l'eau n'ayant pas réagi.

2. Procédé selon la revendication 1, **caractérisé en ce que** l'on ajoute aux substances solides suffisamment d'eau pour que s'établisse ensuite une température du mélange de 80 à 97°C, de préférence, de 88 à 95°C.

3. Procédé selon l'une quelconque des revendications 1 ou 2, **caractérisé en ce que** l'on ajoute aux substances solides une quantité d'eau qui est tout au moins aussi grande que la quantité d'eau nécessaire à l'hydratation ou à la fixation complète des substances solides.

4. Procédé selon l'une quelconque des revendications 1 à 3, **caractérisé en ce que** l'on utilise, en tant que substance solide capable d'hydratation ou pouvant être fixée par voie hydraulique, de la chaux vive, de préférence, de la chaux vive dure.

5. Procédé selon l'une quelconque des revendications 1 à 4, **caractérisé en ce que** le matériau sous forme de poussières est humidifié, pour l'essentiel simultanément et conjointement, à l'aide des substances solides et de l'eau.

6. Procédé selon l'une quelconque des revendications 1 à 5, **caractérisé en ce que** le matériau sous forme de boues est mélangé aux substances solides, après que celles-ci ont été mouillées à l'aide d'eau.

7. Procédé selon l'une quelconque des revendications 1 à 6, **caractérisé en ce que** le matériau sous forme de boues est utilisé avec une teneur en humidité de 20 à 50 %, de préférence, de 30 à 40 %.

8. Procédé selon l'une quelconque des revendications 1 à 7, **caractérisé en ce que** le matériau sous forme de poussières, séparé des substances solides, est mouillé à l'aide d'eau et est ensuite mélangé aux substances solides mouillées.

9. Procédé selon l'une quelconque des revendications 1 à 8, **caractérisé en ce que** la température de mélange et de granulation est mesurée de manière continue et/ou discontinue et **en ce que** l'addition d'eau et/ou l'addition des substances solides et/ou la vitesse de mélange et de granulation est contrôlée en fonction de la température mesurée.

10. Dispositif en vue de l'exécution du procédé selon l'une quelconque des revendications 1 à 9, avec un réacteur de mélange (1), contenant un récipient de mélange (2) et un dispositif de mélange actionnable (3), un dispositif d'alimentation (6) pour les substances solides capables d'hydratation et/ou pouvant être fixées par voie hydraulique (7), tout au moins un dispositif d'alimentation (6,8,25) pour un matériau à granuler (9, 14, 23), un dispositif d'alimentation (15) pour l'eau et avec un dispositif de granulation, **caractérisé en ce que**, dans le dispositif d'alimentation (6) pour les substances solides (7) débouche le dispositif d'alimentation en eau (15) de telle manière que les substances solides alimentées soient capables d'être mouillées par l'eau alimentée, un ou plusieurs détecteurs de température (17) étant disposés dans le récipient de mélange (2), lesquels détecteurs de température (17) sont reliés à un équipement de mesure et de réglage (19), lequel équipement de mesure et de réglage (19) est relié à l'alimentation d'eau (15) et/ou à un équipement de dosage (22) pour les substances solides (7) et/ou à l'entraînement (5) du dispositif de mélange (3).

11. Dispositif selon la revendication 10, **caractérisé en ce que** l'on dispose, sur le récipient de mélange (2), un dispositif d'évacuation de conduits de vapeur (12).

12. Dispositif selon l'une quelconque des revendications 10 ou 11, **caractérisé en ce que** le matériau sous forme de poussières (14) peut être acheminé au récipient de mélange (2) par l'intermédiaire du dispositif d'alimentation des substances solides (6) et **en ce que** les substances solides (7) et les poussières (14) sont capables d'être mouillées conjointement par l'eau, qui peut être acheminée par l'intermédiaire d'un dispositif d'alimentation d'eau (15).

13. Dispositif selon l'une quelconque des revendications 10 à 12, **caractérisé en ce que** l'on prévoit, sur le récipient de mélange (2), un dispositif d'apport séparé (25), grâce auquel on peut alimenter un matériau sous forme de poussière (23) au récipient de mélange (2), un dispositif d'apport d'eau supplémentaire (24) débouchant dans le dispositif d'apport de poussière (25) de telle sorte que les poussières (23), acheminées par l'intermédiaire du dispositif d'apport de poussière séparé (25), peuvent être mouillées par l'eau acheminée grâce au dispositif d'apport d'eau supplémentaire (24).
